# EUROPÄISCHE PATENTANMELDUNG

(11) **EP 0 558 821 A2**
(43) Veröffentlichungstag der Anmeldung: **08.09.1993**
(21) Anmeldenummer: 92122131.3
(22) Anmeldetag: 30.12.1992
(51) Int. Cl.: H04N 5/782, H04N 9/83

(54) **Video Recorder**

(30) Priorität: 08.01.1992 DE 4200222; 10.01.1992 DE 4200434
(71) Anmelder: DEUTSCHE THOMSON-BRANDT GMBH, 78048 Villingen-Schwenningen (DE)
(72) Erfinder: Kluth, Hans-Jürgen, W-7730 VS-Villingen (DE)

(57) **Zusammenfassung**

Die Erfindung geht aus von einem üblichen VHS-Videorecorder. Aufgabe ist es, einen VHS-Recorder so auszubilden, daß neben der herkömlichen analogen VHS-Aufzeichnung zusätzlich die kompatible Aufzeichnung eines digitalen Bildsignals möglich ist.

Das VHS-Signal wird mit einem ersten Kopf (K1) zunächst über die ganze Tiefe (So) der Magnetschicht aufgezeichnet. Anschließend wird das digitale Bildsignal (MPEG) mit einem zweiten Kopf (K2) geringerer Spaltbreite im oberen Teil (S1) der Magnetschicht aufgezeichnet.

Insbesondere VHS-Videorecorder mit zusätzlicher Aufzeichnung eines digitalen Bildsignals.

## Beschreibung

Die Erfindung geht aus von einem Videorecorder nach dem Oberbegriff des Anspruchs 1. Ein derartiger Videorecorder ist bekannt durch die DE-OS 40 14 832. Bei einem VHS-Videorecorder erfolgt eine analoge Aufzeichnung eines mit dem Leuchtdichtesignal frequenzmodulierten Bildträgers, eines mit Farbdifferenzsignalen quadraturmodulierten Farbträgers und von NF-Tonsignalen oder von mit NF-Tonsignalen frequenzmodulierten Tonträgen. Eine Aufzeichnung eines digitalen Bildsignals ist bei einem derartigen Recorder nicht vorgesehen und auch nicht ohne weiteres möglich. Es ist zwar bekannt, digitale Bildsignale aufzuzeichnen. Hierfür sind aber teure kommerzielle Geräte erforderlich.

Der Erfindung liegt die Aufgabe zugrunde, einen handelsüblichen VHS-Recorder so auszubilden, daß neben der herkömmlichen analogen VHS-Aufzeichnung zusätzlich die kompatible Aufzeichnung eines digitalen Bildsignals möglich ist. Diese Aufgabe wird durch die im Anspruch 1 angegebene Erfindung gelöst. Vorteilhafte Weiterbildungen der Erfindung sind in den Unteransprüchen angegeben.

Bei bisherigen Vorschlägen gemäß dem Stand der Technik wurde stets das eigentliche VHS-Signal mit dem durch das Bildsignal frequenzmodulierten Bildträger und dem mit Farbdifferenzsignalen quadraturmodulierten Farbträger in der oberen Magnetschicht aufgezeichnet, während Zusatzsignale wie mit Tonsignalen frequenzmodulierte Tonträger, ein mit Farbdifferenzsignalen quadraturmodulierter Farbträger oder ein mit digitalen Tonsignalen modulierter NICAM-Träger mit Magnetköpfen größerer Spaltbreite in der unteren Magnetschicht aufgezeichnet wurden. Die erfindungsgemäße Lösung wendet sich nun von dieser Richtung ab. Im Gegensatz zum Stand der Technik wird das eigentliche VHS-Signal nicht in der oberen Magnetschicht, sondern anstelle der Zusatzsignale in der unteren Magnetschicht aufgezeichnet, während nunmehr das digitale Bildsignal in der oberen MagnetD Aschicht aufgezeichnet wird. Die Zusatzsignale liegen also nicht mehr in der unteren Magnetschicht, sondern in der oberen Magnetschicht, während das eigentliche VHS-Signal in seinen Parametern unverändert in die untere Magnetschicht verbannt ist. Die Erfindung beruht dabei auf folgender Erkenntnis: Die erzielbare Aufzeichnungsbandbreite in der unteren Magnetschicht ist zwar an sich geringer als die in der oberen Magnetschicht, durch entsprechende Konstruktion und Steuerung der Köpfe aber ausreichend, um in dieser Schicht das übliche VHS-Signal mit einer Gesamtbandbreite von etwa 6 MHz aufzuzeichnen. Die obere Magnetschicht mit dem Kopf geringerer Spaltbreite und der größeren Bandbreite steht dann für die Aufzeichnung eines breitbandigen Digitalsignals zu Verfügung.

Es hat sich gezeigt, daß beim VHS-Signal trotz der Aufzeichnung in der unteren Magnetschicht keine merkbare Verringerung der Qualität auftritt. Die Aufzeichnung ist insofern kompatibel, als ein erfindungsgemäß bespieltes Band mit einem VHS-Recoder zur Wiedergabe des VHS-Signals abgespielt werden kann, da ein üblicher VHS-Recorder die gesamte Tiefe der Magnetschicht abtastet. Dabei wird eine ausreichende Entkopplung zwischen den Signalen in der oberen und unteren Magnetschicht durch die unterschiedlichen Azimutwinkel von z.B. ±6° für das VHS-Signal in der unteren Magnetschicht und ±30° für das digitale Bildsignal in der oberen Magnetschicht erreicht. Beide Signale liegen in einem Frequenzbereich, in dem die erforderliche Azimutdämpfung wirksam ist. Der erfindungsgemäße Recorder bietet somit die Möglichkeit, auf einem Band zwei voneinander unabhängige Bildsignale aufzuzeichnen, z.B. denselben Film einmal analog und einmal digital. Ebenso können voneinander unabhängige Filme aufgezeichnet werden. Die zweifache Aufzeichnung eines Bildsignals bietet auch die Möglichkeit, in den beiden Magnetschichten Teilsignale oder Differenzsignale eines HDTV-Signals oder eines Stereo-Bildsignals aufzuzeichnen. Der Bandverbrauch wird beim erfindungsgemäßen Recorder nicht erhöht. Durch die Erfindung wird somit ein Kombi-Recorder geschaffen, durch den eine kompatible Aufzeichnung eines üblichen VHS-Signals und zusätzlich eines digitalen Bildsignals ohne großen Mehraufwand möglich ist.

Die Erfindung wird im folgenden anhand der Zeichnung erläutert.
Darin zeigen
- Fig. 1, 2: die Frequenzspektren der Signale in den beiden Schichten,
- Fig. 3: ein Blockschaltbild für die Aufnahme,
- Fig. 4: ein Blockschaltbild für Wiedergabe und
- Fig. 5,6,7: verschiedene Ausbildungen der beiden Spuren auf dem Magnetband.

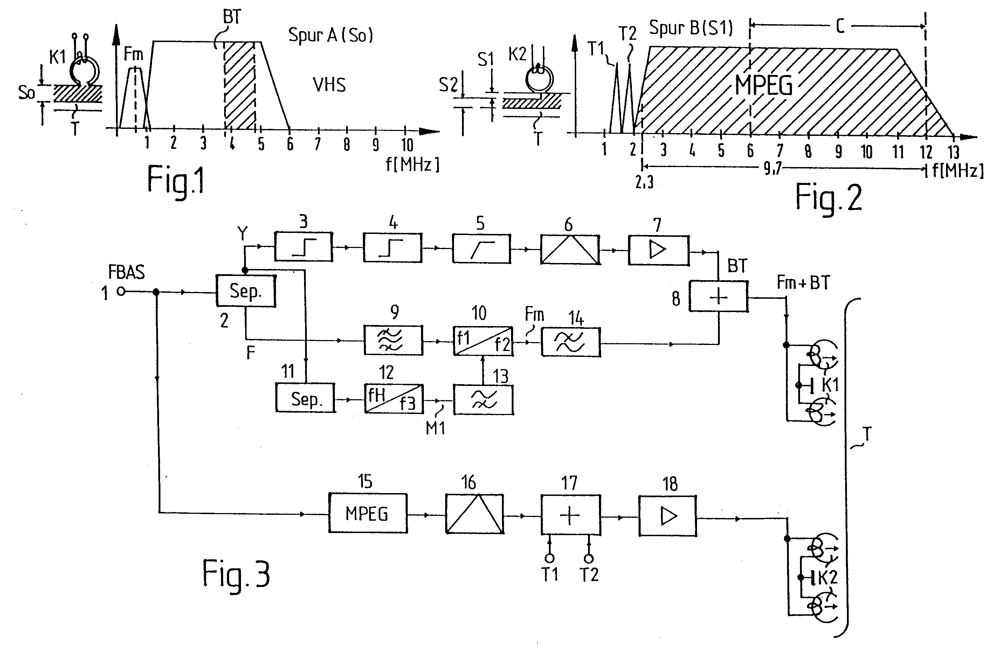

Gemäß Fig. 1 wird zunächst das übliche VHS-Signal mit dem mit dem Leuchtdichtesignal frequenzmodulierten Bildträger BT mit dem schraffiert angedeuteten Frequenzhub von 3,8 - 4,8 MHz und dem in der Frequenz auf 627 kHz herabgesetzten Farbträger Fm mit Magnetköpfen K1 mit einer Spaltbreite von 0,4 µm und einem Azimutwinkel von ±6° über die gesamte Magnetschicht So des Magnetbandes T aufgezeichnet. Diese Aufzeichnung entspricht somit der üblichen Aufzeichnung eines VHS-Recorders. Das VHS-Signal belegt somit eine Spur A.

Gemäß Fig. 2 erfolgt im Anschluß an die Aufzeichnung gemäß Fig. 1 die Aufzeichnung eines digitalen Bildsignals, das sich etwa von 2,3 - 12 MHz erstreckt. Das digitale Bildsignal ist komprimiert, hinsichtlich Redundanz und Information reduziert und entspricht einem Vorschlag der Arbeitsgruppe MPEG (motion picture expert group). Unterhalb dieses Signals, das eine Aufzeichnungsbandbreite von 9,7 MHz hat, werden zwei mit Tonsignalen frequenzmodulierte Tonträger T1 mit 1,4 MHz und T2 mit 1,8 MHz aufgezeichnet. Dieses Signal wird mit Magnetköpfen K2 mit einer geringeren Spaltbreite von 0,2 µm in der oberen Magnetschicht S1 aufgezeichnet, wobei in dieser Magnetschicht die Aufzeichnung des VHS-Signals gemäß Fig. 1 wieder gelöscht wird. Die Spur A mit dem VHS-Signal nimmt somit nur noch die untere Magnetschicht S2 ein. Die Köpfe K2 liegen also in Laufrichtung des Bandes hinter den Köpfen K1. Die große Aufzeichnungsbandbreite der Spur B in der Magnetschicht S1 wird also für die Aufzeichnung des breitbandigen digitalen Bildsignals ausgenutzt.

Es ist auch möglich, das digitale Bildsignal nur in dem Frequenzbereich C von 6 - 12 MHz aufzuzeichnen. Dann besteht keine Überlappung mehr zwischen den Frequenzbereichen des VHS-Signals gemäß Fig. 1 und dem Frequenzbereich des digitalen Bildsignals gemäß Fig. 2. Ein Übersprechen zwischen den Signalen würde dann weitestgehend ausgeschaltet.

Fig. 3 zeigt ein Blockschaltbild einer Aufnahmeschaltung für die in den Figuren 1 und 2 dargestellten Signale. Das FBAS-PAL-Signal an der Klemme 1 wird in der Trennstufe 2 in das Leuchtdichtesignal Y und den modulierten Farbträger F aufgespalten. Y gelangt über die Sub-Preemphasis-Stufe 3, die Haupt-Preemphasis-Stufe 4 und den Amplitudenbegrenzer 5 auf den FM-Modulator 6, der über den Verstärker 7 den modulierten Bildträger BT an die Addierstufe 8 liefert. Der Farbträger F mit der Frequenz f1 wird über den Bandpaß 9 mit einem Durchlaßbereich von 4,43 ±0,6 - 0,8 MHz dem Umsetzer 10 zugeführt. In der Abtrennstufe 11 werden die Zeilensynchronimpulse von Y abgetrennt und in dem Umsetzer 12 auf die Frequenz f3 des Mischträgers M1 umgesetzt. Der Mischträger M1 gelangt über den Hochpaß 13 auf den anderen Eingang des Umsetzers 10. In dem Umsetzer 10 wird der Farbträger F auf den Farbträger Fm mit der Frequenz f2 umgesetzt, der über den Tiefpaß 14 auf den anderen Eingang der Addierstufe 8 gelangt. Die Addierstufe 8 liefert das Signal Fm + BT gemäß Fig. 1, das mit den Köpfen K1 auf dem Magnetband T aufgezeichnet wird.

Das FBAS-Signal an der Klemme 1 wird außerdem dem MPEG-Coder 15 zugeführt, der an seinem Ausgang das digitale Bildsignal mit 6 MBit und einer Bandbreite von 3 MHz erzeugt. Das Signal kann auch eine größere Bandbreite von z.B. 15 MBit bei einem HDTV-Signal aufweisen. Dieses Signal wird dem Kanalcoder 16 zugeführt, der eine für die Aufzeichnung vorteilhafte Modulation bewirkt. Dadurch entsteht das Signal gemäß Fig. 2 mit einer Gesamtbandbreite von 9,7 MHz. Das derart kanalmodulierte Signal gemäß Fig. 2 gelangt auf die Addierstufe 17, in der die beiden mit Tonsignalen frequenzmodulierten Tonträger T1, T2 addiert werden. Dieses kombinierte Signal mit dem Frequenzspektrum gemäß Fig. 2 gelangt über den Verstärker 18 auf die Köpfe K2 und wird damit auf dem Magnetband T aufgezeichnet.

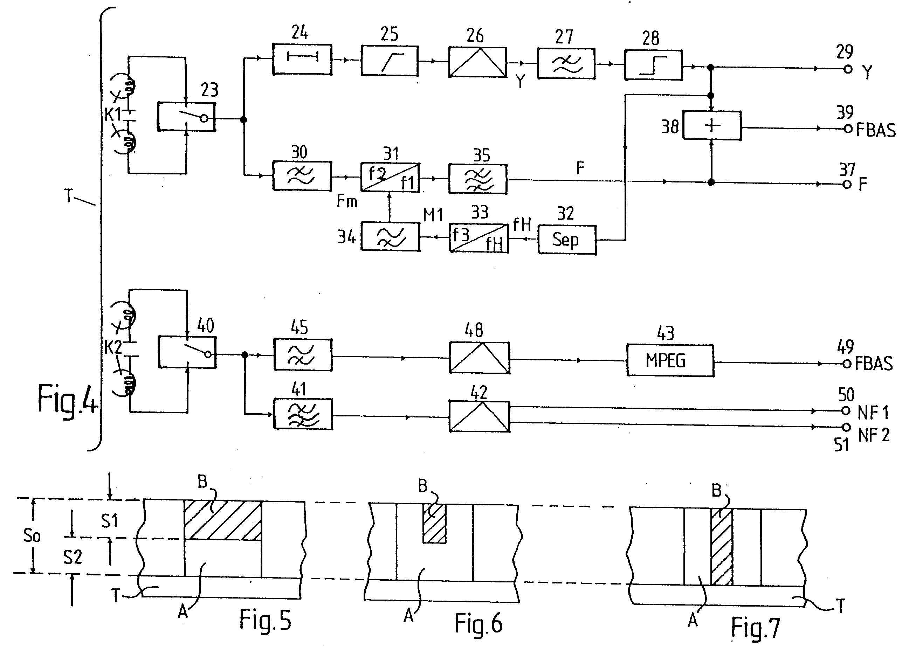

Fig. 4 zeigt die entsprechende Wiedergabeschaltung für die Aufnahmeschaltung gemäß Fig. 3. Vom Ausgang des Umschalters 23, der spurweise zwischen den beiden Köpfen K1 umschaltet, gelangt der modulierte Bildträger BT über die Laufzeitstufe 24 und den Amplitudenbegrenzer 25 auf den FM-Demodulator 26, der das Leuchtdichtesignal Y liefert. Y gelangt über den Tiefpaß 27 mit einer Grenzfrequenz von etwa 5 MHz und die Deemphasis-Stufe 28 auf die Klemme 29. Der Farbträger Fm gelangt über den Tiefpaß 30 mit einer Grenzfrequenz von etwa 0,7 MHz auf den Umsetzer 31. Y gelangt außerdem auf die Trennstufe 32, die zeilenfrequente Impulse mit der Frequenz fH an den Umsetzer 33 liefert. Der Umsetzer 33 liefert den Mischträger M1 mit der Frequenz f3, der über den Tiefpaß 34 auf den anderen Eingang des Umsetzers 31 gelangt. Der Umsetzer 31 liefert den Farbträger F mit der Frequenz f1, der über den Bandpaß 35 auf die Klemme 37 gelangt. In der Addierstufe 38 wird aus Y und F das FBAS-Signal gebildet, das an der Klemme 39 für die Bildwiedergabe zu Verfügung steht.

Mit den Köpfen K2 wird das Signal gemäß Fig. 2 abgetastet. Vom Ausgang des spurweise zwischen den Köpfen K2 umschaltenden Umschalters 40 werden die beiden Tonträger T1, T2 mit dem Bandpaß 41 ausgewertet und dem FM-Demodulator 42 zugeführt. Die dadurch gewonnenen Tonsignale NF1 und NF2 stehen an den Klemmen 50, 51 zur Verfügung. Das digitale MPEG-Signal gemäß Fig. 2 wird mit dem Tiefpaß 45 frequenzselektiv ausgewertet und dem Kanaldecoder 48 zugeführt. Das digitale Ausgangssignal des Decoders 48 gelangt auf den MPEG-Decoder 43, der an der Klemme 49 wieder ein analoges FBAS-Signal liefert.

In Fig. 5 erstreckt sich die Spur A für das VHS-Signal gemäß Fig. 1 über die gesamte Spurbreite, jedoch nur über die tiefer liegende Magnetschicht S2. Die Spur B für das Signal gemäß Fig. 2 erstreckt sich ebenfalls über die gesamte Spurbreite, jedoch nur über die obere Magnetschicht S1.

In Fig. 6 ist die Spur B durch die Köpfe K2 schmaler als die Spur A und erstreckt sich nur über die obere Magnetschicht S1.

In Fig. 7 erstreckt sich die Spur A über die gesamte Spurbreite und die gesamte Magnetschicht So, während die Spur B sich ebenfall über die gesamte Magnetschicht So erstreckt, jedoch wie in Fig. 6 schmaler ist als die Spur A. Diese Lösung hat folgenden Vorteil: Einerseits bleibt die Spur A sowohl in der unteren Magnetschicht S2 als auch in der oberen Magnetschicht S1 erhalten, was für den störabstand vorteilhaft ist. Das Signal gemäß Fig. 2 in der Spur B kann indessen unabhängig von dem Signal in der Spur A aufgezeichnet, gelöscht und neu aufgezeichnet werden. Durch diese eingelagerte Position der Spur B in der Spur A ist es somit möglich, das Signal in der Spur B beliebig oft zu ändern, ohne das Signal in der Spur A zu beeinflussen. Das ist z.B. zur Aufzeichnung eines neuen Bildsignals oder für Nachvertonungen vorteilhaft.

Das analoge VHS-Bildsignal in der Spur A gemäß Fig 1 und das digitale Bildsignal in der Spur B gemäß Fig. 2 können dieselbe Aufzeichnung, also denselben Film darstellen. Sie können aber auch voneinander unabhängige Signale sein, verschiedene Aufzeichnungen darstellen oder auch die Teilsignale oder Differenzsignale eines HDTV-Signals oder Stereobildsignals beinhalten. Das digitale Bildsignal ist vorzugsweise ein Digitalsignal, das komprimiert und in der Redundanz und in der Information reduziert ist. Durch eine derartige Vorbearbeitung des Signals läßt sich die erforderliche Aufzeichnungsbandbreite beträchtlich verringern, insbesondere auf einen Wert von 6 MBit entsprechend einer Bandbreite von 3 MHz oder 15 MBit bei einem HDTV-Signal entsprechend einer Bandbreite von 7,5 MHz. Die Aufzeichnung in der Spur B gemäß Fig. 7 über die gesamte Tiefe So der Magnetschicht läßt sich vorzugsweise durch einen entsprechend hohen Aufsprechstrom für die Köpfe K2 und eine entsprechende Sättigung der Magnetisierung erreichen. Das digitale Signal gemäß Fig. 2 in der Spur B in der oberen Magnetschicht S1 kann auch ein PCM-Tonsignal sein.

Das in der oberen Schicht S1 mit den Magnetköpfen K2 aufgezeichnete breitbandige Signal gemäß Fig. 2 kann auch ein HDTV-Signal darstellen. Dann hat das Signal gemäß Fig. 2 vorzugsweise die volle Bandbreite von 2,3 - 12 MHz und nicht die beschriebene verringerte Bandbreite C. Das mit K2 aufgezeichnete Signal gemäß Fig. 2 hat vorzugsweise die doppelte Bandbreite des in der Schicht S2 mit den Köpfen K1 aufgezeichneten Signals gemäß Fig. 1.

Bei einer Weiterbildung der Erfindung wird das Helpersignal bei der Aufzeichnung des VHS-Signals in der unteren Magnetschicht durch eine Schwarztastung oder Grautastung vollständig beseitigt. Bei der Wiedegabe des von einem ersten Magnetkopf entnommenen VHS-Signals können somit Störungen innerhalb der schwarzen Balken nicht mehr auftreten. Das so im VHS-Signal eliminierte Helpersignal wird indessen mit einem zweiten Magnetkopf in der oberen Schicht des Magnetbandes aufgezeichnet und steht somit für eine hochwertige PAL-Plus-Wiedergabe mit Bildformat 16:9 und voller Zeilenzahl zur Verfügung. Dabei wird das VHS-Signal mit dem ersten Magnetkopf in einer unteren Schicht des Magnetbandes aufgezeichnet. Dabei wird die Erkenntnis ausgenutzt, daß die verfügbare Aufzeichnungsbandbreite der unteren Magnetschicht, bedingt durch die größere Spaltbreite des Kopfes, zwar geringer ist als die verfügbare Aufzeichnungsbandbreite in der oberen Magnetschicht, jedoch für die Aufzeichnung eines normalen VHS-Signals ausreicht. Dadurch kann die obere Magnetschicht, die wegen der geringeren Spaltbreite des Magnetkopfes eine größere verfügbare Aufzeichnungsbandbreite hat, in vorteilhafter Weise für eine hochwertige Aufzeichnung des Helpersignals genutzt werden.

Durch diese Weiterbildung ergeben sich mehrere Vorteile. Zunächst werden bei einer reinen VHS-Wiedergabe durch Eliminierung des Helpersignals Störungen in den schwarzen Balken mit Sicherheit vermieden. Andererseits ist jedoch das Helpersignal für eine PAL-Plus-Wiedergabe mit Bildformat 16:9 verfügbar, so daß der Recorder eine Bildwiedergabe mit Format 16:9 und vollständiger Zeilenzahl ermöglicht. Vorteilhaft ist, daß der erste Magnetkopf für das VHS-Signal in der unteren Magnetschicht wegen seiner größeren Spaltbreite den mit dem Helpersignal modulierten Träger in der oberen Magnetschicht nicht lesen kann und somit durch diesen auch nicht gestört wird. Außerdem liegen die Frequenzbereiche des VHS-Signals in der unteren Magnetschicht und des Helpersignals in der oberen Magnetschicht im wesentlichen in einem Bereich oberhalb 1,5 - 2 MHz. In diesem Frequenzbereich ist die durch die unterschiedlichen Azimutwinkel der beiden Köpfe der unteren und oberen Magnetschicht bewirkte Azimutdämpfung wirksam. Wenn z.B. die Köpfe für die Aufzeichnung des VHS-Signals in der unteren Magnetschicht einen Azimutwinkel von ±6° und die Köpfe für die Aufzeichnung des Helpersignals in der oberen Magnetschicht einen Azimutwinkel von ±30° haben, wird auch durch die Azimutdämpfung ein Übersprechen zwischen den Signalen der beiden Magnetschichten weitestgehend vermieden. Unterhalb des Frequenzbereiches des mit dem Helpersignal modulierten Trägers in der oberen Magnetschicht können zusätzlich mit Tonsignalen frequenzmodulierte Tonträger aufgezeichnet werden. Der Recorder ermöglicht also die getrennte Aufzeichnung und getrennte Auswertung von insgesamt vier Signalen, nämlich des mit dem Leuchtdichtesignal frequenzmodulierten Bildträgers und des in der Frequenz herabgesetzten color under Farbträgers in der unteren Magnetschicht und des mit dem Helpersignal modulierten zusätzlichen Trägers sowie weiterer Tonträger in der oberen Magnetschicht. Für das Helpersignal wird ein besonders hoher Störabstand erreicht. Das beruht darauf, daß einerseits für das Helpersignal ein großer Frequenzbereich zur Verfügung steht und somit ein großer Frequenzhub ermöglicht ist und andererseits die Aufzeichnung mit voller Amplitude vorgenommen werden kann. Gegenüber bisherigen Aufzeichnungen des Helpersignals kann dadurch der Störabstand etwa um den Faktor 4 erhöht werden.

Die beschriebene Weiterbildung wird im folgenden anhand der Figuren erläutert.

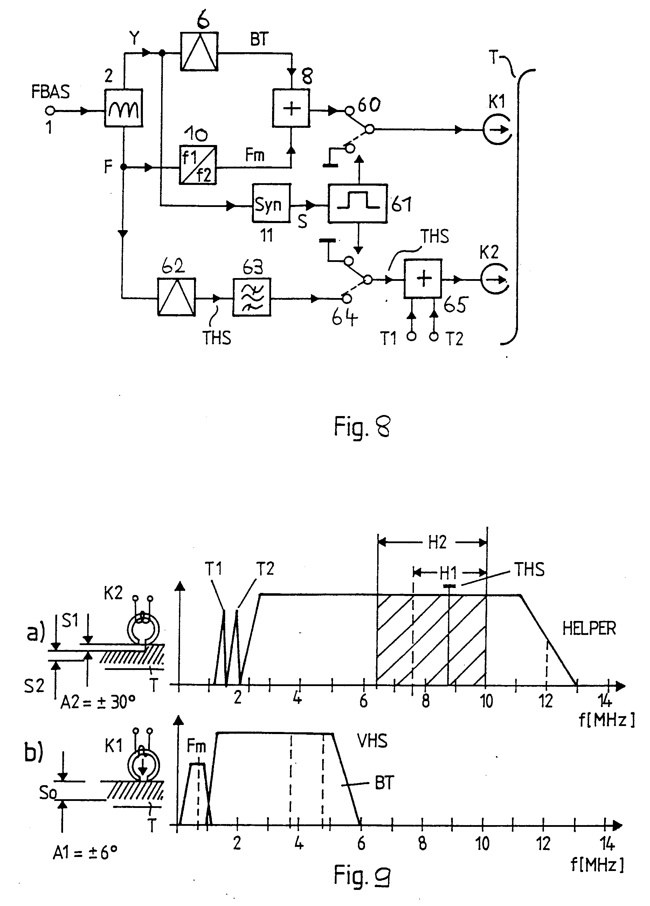

In Fig. 8 wird das an der Klemme 1 stehende FBAS-Signal mit dem Kammfilter 2 in das Leuchtdichtesignal Y und den Farbträger F getrennt. Y wird in dem FM-Modulator 6 einem Bildträger BT in Frequenzmodulation aufmoduliert, der an die Addierstufe 8 gelangt. Der Farbträger F mit der Frequenz f1 von 4,43 MHz wird in dem Frequenzumsetzer 10 auf eine geringere Frequenz f2 von 626 kHz umgesetzt. Der dadurch entstehende modifizierte Farbträger Fm, auch color under-Träger genannt, gelangt ebenfalls auf die Addierstufe 8. Das Ausgangssignal der Addierstufe 8, also BT + Fm, gelangt über den Schalter 60 in der dargestellten Stellung auf den ersten Magnetkopf K1 mit einer Spaltbreite von 0,9 µm und wird dort auf dem Magnetband T aufgezeichnet. In der Praxis sind jeweils zwei Magnetköpfe K1 auf einer rotierenden Kopftrommel angeordnet.

Der Farbträger F gelangt außerdem auf den FM-Modulator 62, der einen mit F frequenzmodulierten Träger THS erzeugt. Dieser Träger wird mit dem Bandpaß 63 ausgewertet und dem Schalter 64 zugeführt. Der Ausgang des Schalter 64 ist mit dem Eingang der Addierstufe 65 verbunden, der außerdem zwei mit Tonsignalen frequenzmodulierte Tonträger T1, T2 zugeführt werden. Das Ausgangssignal der Addierstufe 65 gelangt an den zweiten Magnetkopf K2 mit einer Spaltbreite von 0,2 µm und wird mit diesem auf denselben Spuren wie das Signal des Magnetkopfes K1 auf dem Magnetband T aufgezeichnet.

Anhand der Fig. 9 wird im folgenden erläutert, wie das eigentliche VHS-Signal und das Helpersignal aufgezeichnet werden. Während der Dauer des eigentlichen VHS-Signals ohne Helpersignal, also währen etwa 432 Zeilen eines Bildes, befinden sich die Schalter 60, 64 in der oberen Stellung. Das VHS-Signal dieser 432 Zeilen wird dann in bekannter Weise mit K1 aufgezeichnet. Der Eingang der Addierstufe 65 ist mit dem Schalter 64 geerdet, da während dieser Zeilen ein Helpersignal nicht vorliegt. Die Tonträger T1, T2 werden während dieser Zeit jedoch mit K2 aufgezeichnet. Die Aufzeichnung mit K1 erfolgt mit einem Azimutwinkel A1 von ±6°.

Während der 144 Zeilen mit dem Helpersignal, die am oberen und unteren Bildrand schwarze Balken schreiben, sind die Schalter 60 und 64 in die untere Stellung umgelegt. Das dem Magnetkopf K1 zugeführte Signal ist jetzt auf einen Schwarzwert oder Grauwert getastet, so daß während dieser Zeilen mit K1 kein Signal aufgezeichnet wird. Stattdessen gelangt jetzt der Träger THS der mit dem durch das Helpersignal modulierten Farbträger F seinerseits frequenzmoduliert ist, gemäß Fig. 90 auf die Addierstufe 65 und wird somit zusammen mit T1 und T2 mit K2 in der oberen Magnetschicht S1 aufgezeichnet. Der dem Träger THS aufmodulierte, seinerseits mit dem Helpersignal modulierte Farbträger F hat eine Frequenzhub H1 von ±1,2 MHz, während der mit dem Farbträger modulierte Träger THS einen Frequenzhub H2 von 3,6 MHz (6,4 MHz - 10,0 MHz) aufweist. Das gesamte Frequenzspektrum des mit dem Helpersignal modulierten Trägers THS erstreckt sich von 2,3 - 12 MHz. Die Aufzeichnung mit K2 erfolgt mit einem Azimutwinkel A2 von ±30°.

Bei der Wiedergabe können die derart aufgezeichneten Signale getrennt und ohne gegenseitige Beeinflussung zurückgewonnen werden. Der Kopf K1 liefert dann das Signal BT + Fm für eine reine VHS-Wiedergabe mit 432 Zeilen, also z.B. für ein Bild mit dem Format 16:9 auf einem Bildschirm mit dem Format 4:3. Das ebenfalls aufgezeichnete Helpersignal bewirkt in den schwarzen Balken keine Störungen, weil dieses Signal mit K2 nur in der oberen Magnetschicht S1 aufgezeichnet ist und von dem Kopf K1 mit der größeren Spaltbreite von 0,9 µm nicht gelesen wird. Die beiden Tonträger T1, T2 werden dabei mit K2 aus der oberen Magnetschicht S1 gelesen und stehen für die Tonwiedergabe zur Verfügung.

Während der 144 Zeilen kann der Träger THS mit K2 vom Band T abgetastet werden. Durch eine dem Modulator 62 angepaßte Demodulation wird dann der mit dem Helpersignal modulierte Farbträger F zurückgewonnen. Durch Demodulation des Farbträgers F kann das Helpersignal zur Erzeugung eines hochwertigen 16:9 Bildes mit voller Zeilenzahl zurückgewonnen werden.

## Patentansprüche

1. Videorecorder mit einem ersten Kopf (K1) zur Aufzeichnung eines VHS-Signals über die ganze Tiefe (So) der Magnetschicht mit einem ersten Azimutwinkel (6°) und mit einem zweiten Kopf (K2) zur Aufzeichnung eines Digitalsignals über einen Teil (S1) der Tiefe der Magnetschicht mit einem zweiten Azimutwinkel (30°), **dadurch gekennzeichnet**, daß die Köpfe (K1, K2) räumlich so angeordnet und so bemessen und angesteuert sind, daß zunächst die Aufzeichnung des VHS-Signals mit dem ersten Kopf (K1) und danach die Aufzeichnung des Digitalsignals mit dem zweiten Kopf (K2) im oberen Teil (S1) der Magnetschicht erfolgt.

2. Recorder nach Anspruch 1, **dadurch gekennzeichnet,** daß das Digitalsignal ein komprimiertes, in Redundanz und Information reduziertes digitales Bildsignal ist.

3. Recorder nach Anspruch 1, **dadurch gekennzeichnet**, daß die Spaltbreite (0,4 µm) des ersten Kopfes (K1) größer ist als die Spaltbreite (0,2 µm) des zweiten Kopfes (K2).

4. Recorder nach Anspruch 1, **dadurch gekennzeichnet**, daß die von dem zweiten Kopf (K2) geschriebene Spur (B) schmaler ist als die von dem ersten Kopf (K1) geschriebene Spur (A).

5. Recorder nach Anspruch 1, **dadurch gekennzeichnet**, daß der Aufsprechstrom für den zweiten Kopf (K2) so groß bemessen ist, daß er eine Aufzeichnung über die gesamte Tiefe (So) der Magnetschicht bewirkt.

6. Recorder nach Anspruch 1, **dadurch gekennzeichnet**, daß unterhalb des Frequenzbereiches des Digitalsignals mit Tonsignalen (NF1, NF2) frequenzmodulierte analoge Tonträger (T1, T2) aufgezeichnet werden.

7. Recorder nach Anspruch 1, **dadurch gekennzeichnet**, daß der Frequenzbereich (C) des Digitalsignals in der oberen Magnetschicht (S1) nach unten so begrenzt ist, daß er keine Überlappung mit dem Frequenzbereich des VHS-Signals in der unteren Magnetschicht (S2) aufweist.

8. Recorder nach Anspruch 1, **dadurch gekennzeichnet**, daß das VHS-Signal und das Digitalsignal Teilsignale oder Differenzsignale eines HDTV-Signals oder eines StereoBildsignals beinhalten.

9. Recorder nach Anspruch 1, **dadurch gekennzeichnet**, daß das Digitalsignal ein Audio-PCM-Signal beinhaltet.

10. Recorder nach Anspruch 1, **dadurch gekennzeichnet**, daß das mit dem zweiten Kopf (K2) aufgezeichnete Signal die doppelte Aufzeichnungsbandbreite des mit dem ersten Kopf (K1) aufgezeichneten Signals hat.

11. Recorder nach Anspruch 1, **dadurch gekennzeichnet**, daß das mit dem zweiten Kopf (K2) aufgezeichnete Signal ein HDTV-Fernsehsignal ist.

12. Recordern nach Anspruch 1, **dadurch gekennzeichnet**, daß die mit dem größeren Azimutwinkel (±30°) und der kleineren Spaltbreite (0,2 µm) aufgezeichneten Signale unabhängig von den mit dem kleineren Azimutwinkel (±6°) und der größeren Spaltbreite (0,4 µm) aufgezeichneten Signalen löschbar und/oder überspielbar sind.

13. Recorder nach Anspruch 1, **gekennzeichnet durch**,folgende Merkmale:
a) Das einem ersten Magnetkopf (K1) zugeführte VHS-Signal wird während der zweiten Gruppe von Zeilen auf einen konstanten Schwarz- oder Grauwert getastet und in einer unteren Magnetschicht (S2) aufgezeichnet,
b) der mit dem Helpersignal (HS) modulierte Farbträger (F) wird einem Träger (THS) in FM aufmoduliert und während der zweiten Gruppe von Zeilen mit einem zweiten Magnetkopf (K2) in einer oberen Magnetschicht (S1) aufgezeichnet (Fig. 8, 9).

14. Recorder nach Anspruch 13, **dadurch gekennzeichnet**, daß die Spaltbreite des ersten Magnetkopfes (K1) etwa 0,9 µm und die Spaltbreite des zweiten Magnetkopfes (K2) etwa 0,2 µm beträgt (Fig. 9).

15. Recorder nach Anspruch 13, **dadurch gekennzeichnet**, daß der Azimutwinkel (A1) des ersten Magnetkopfes (K1) etwa ±6° und der Azimutwinkel (A2) des zweiten Magnetkopfes (K2) etwa ±30° beträgt (Fig. 9).

16. Recorder nach Anspruch 13, **dadurch gekennzeichnet**, daß mit dem zweiten Magnetkopf (K2) unterhalb des Frequenzbereiches des mit dem Helpersignal modulierten Trägers (THS) additiv mit Tonsignalen frequenzmodulierte Tonträger (T1, T2) aufgezeichnet werden (Fig. 8, 9).
